# EUROPÄISCHE PATENTANMELDUNG

(11) **EP 1 308 469 A1**
(43) Veröffentlichungstag der Anmeldung: **07.05.2003**
(21) Anmeldenummer: 02023421.7
(22) Anmeldetag: 19.10.2002
(51) Int. Cl.: C08F 255/02, B29C 47/00

(54) **Vernetzte Profile**

(30) Priorität: 05.11.2001 DE 10154303
(71) Anmelder: REHAU AG + Co, 95111 Rehau (DE)
(72) Erfinder: Steffl, Udo, 95111 Rehau (DE); Rhönisch, Thomas, 95111 Rehau (DE)

(57) **Zusammenfassung**

Die Erfindung betrifft Profile aus einer vernetzten Polyolefinzusammensetzung, die aus mindestens zwei Komponenten besteht.

Aufgabe der Erfindung ist es, flexible vernetzte Profile zur Verfügung zu stellen, welche die genannten Nachteile und Probleme des Standes der Technik nicht aufweisen und über eine thermoplastische Verarbeitung ohne zusätzlichen Vulkanisationsschritt herstellbar sind. Weiterhin sollen diese Profile kostengünstig, beliebig einfärbbar und alterungsstabil sein, sowie keine Ausblüh- oder Ausschwitzerscheinungen zeigen.

Dies wird dadurch gelöst, dass die Polyolefinzusammensetzung besteht aus 100 Gewichtsteilen einer Komponente (A), bestehend aus einer silangepfropften Polyolefinmischung, wobei mindestens ein Mischungsbestandteil davon ein Ethylen-Alpha-Olefin-Copolymer mit mehr als 3C-Atomen ist, dessen Schmelzindex > 3,0 g/10 min bei 190°C/2,16 kg, dessen Mol-Gewichtsverteilung M_{w}/Mₙ zwischen 1,5 und 3,5 liegt und dessen Schmelzpunkt < 100°C ist und 0 - 200 Gewichtsteile einer Komponente (B), bestehend aus einem oder mehreren anorganischen Füllstoffen und/oder halogenhaitigen Flammschutzmitteln und/oder synergistischen Flammschutzmitteln, aus Antimon- und Halogenverbindungen.

## Beschreibung

Die vorliegende Erfindung betrifft Profile aus einer vernetzten Polyolefinzusammensetzung, die aus mindestens zwei Komponenten besteht.

Herkömmliche Profile oder Schläuche werden aus Thermoplasten, Elastomeren und thermoplastischen Elastomeren hergestellt.
Im Bereich der Thermoplaste ist mengenmäßig nach wie vor Polyvinylchlorid der wichtigste Werkstoff, im Bereich der thermoplastischen Elastomere sind es die vernetzten Polyolefinkautschuke auf Basis Ethylen-Propylen oder Ethylen-Propylen-Dien (EPDM).

Die Vernetzung der Polyolefinkautschuke kann nach chemischen oder physikalischen Methoden erfolgen.
Wie beispielsweise von W. Hoffmann "Vernetzungsmittel in Ethylen-Propylen-Kautschuk" in Kautschuk, Gummi, Kunststoff, 40. Jahrg., Nr. 4/1987, Seite 308 ff. beschrieben, unterscheidet man bei den technisch bedeutsamen Vernetzungstechnologien zwischen Schwefelvernetzung, Peroxidvernetzung und Strahlenvernetzung.

Durch chemische Modifizierung der Ethylen-Propylen-Kautschuke sind weitere Vulkanisationsverfahren denkbar. Beispielsweise finden silanfunktionalisierte, vernetzte EPDM-Typen vor allem Interesse in der Kabelindustrie wegen ihrer erhöhten Wasserbeständigkeit.

Das Silanvernetzungsverfahren unterscheidet sich von den anderen genannten Methoden vor allem durch die Prozesstechnik: In einem Primärschritt werden zunächst Polymerkettenradikale mit Hilfe üblicher Radikalinitiatoren erzeugt. An diese reaktiven Stellen addieren sich Silanmoleküle mit ihrer Vinylfunktion, wobei die silangepfropften Polymere sich hierbei immer noch im thermoplastischen Zustand befinden. Die eigentliche Vernetzung findet dann nach der Formgebung durch gezielte Einwirkung von Feuchtigkeit statt.
Diese Vernetzungstechnik ist in der US 3 646 155 beschrieben.

Die Silantechnologie hat Bedeutung bei der Fertigung von Kunststoffrohren aus vernetztem Niederdruckpolyethylen (HDPE) gefunden, sowie - wie von B. E. Roberts und S. Verne in Proc. Golden Jubilee Conf. "Polyethylenes 1933 - 1983", London, UK, Juni 1983, Institute of Materials, Paper C3-1-1, beschrieben - zur Isolation und Ummantelung von Kabeln aus Hochdruckpolyethylen (LDPE) und LLDPE.
Nachteilig ist dabei, dass man bisher von wenig flexiblen bis steifen kristallinen Basismaterialien ausgehen musste, die ihrerseits wiederum nur die Herstellung harter silanvernetzter Artikel ermöglichten.

Stellt man vernetzte Artikel aus EPDM-Kautschuken her, ist zwar die Einstellung weicher Rezepturen möglich, jedoch beobachtet man auch hier eine Reihe von Nachteilen: Sowohl bei der Peroxidvernetzung als auch bei der Schwefelvernetzung führt die Fülle an Zuschlagsstoffen, beispielsweise Vernetzungshilfsmittel, Koaktivatoren oder Verzögerer, zu Ausblühungserscheinungen und Geruchsbelästigungen. Auch Verfärbung und Abfärbung der Produkte werden beobachtet, eine Einfärbung der Profile in hellen Farbtönen ist nicht möglich. Weiterhin weisen Ethylen-Propylen-Dien-Kautschuke nach der Vernetzung nach wie vor einen Rest an Doppelbindungen auf, so dass die Alterungsstabilität eingeschränkt ist oder ein spezieller Schutz gegen UV-Einwirkung, Feuchte- und Temperaturschwankungen notwendig wird.

Aufgabe der vorliegenden Erfindung ist es daher, flexible vernetzte Profile zur Verfügung zu stellen, welche die genannten Nachteile und Probleme nicht aufweisen und über eine thermoplastische Verarbeitung ohne zusätzlichen Vulkanisationsschritt herstellbar sind. Weiterhin sollten diese Profile kostengünstig, beliebig einfärbbar und alterungsstabil sein, sowie keine Ausblüh- oder Ausschwitzerscheinungen zeigen.

Erfindungsgemäß gelingt die Lösung der Aufgabe durch die Merkmale gemäß Anspruch 1. Bevorzugte Ausführungen und Weiterbildungen der Erfindung sind in den Unteransprüchen ausgeführt.

Die erfindungsgemäßen Profile aus einer vernetzten Polyolefinzusammensetzung bestehen mindestens aus zwei Komponenten:
(I) 100 Gewichtsteile einer Komponente (A), bestehend aus einer silangepfropften Polyolefinmischung, wobei mindestens ein Mischungsbestandteil davon ein Ethylen-α-Olefincopolymer mit mindestens 3 C-Atomen ist, dessen Schmelzindex > 3,0 g/10 min bei 190°C/2,16 kg, dessen Molgewichtsverteilung M_{w}/Mₙ zwischen 1,5 und 3,5 liegt und dessen Schmelzpunkt kleiner 100°C ist.
(II) 0 - 200 Gewichtsteile einer Komponente (B), bestehend aus einem oder mehreren anorganischen Füllstoffen und/oder halogenhaltigen Flammschutzmitteln und/oder synergistischen Flammschutzmitteln.

Die genannten Ethylen-α-Olefin-Copolymere mit 3 C-Atomen sind Polyolefine, die mit einem speziellen Polymerisationsverfahren, unter Verwendung sog. Metallocen-Katalysatoren, hergestellt werden.
Diese Copolymere weisen auf Grund ihrer sehr engen Molgewichtsverteilung, ihres niedrigen Schmelzpunktes und ihrer ungewöhnlichen Rheologie Besonderheiten in ihren Werkstoffeigenschaften und ihrem Verarbeitungsverhalten auf, einerseits gegenüber herkömmlichen Ethylen-α-Olefin-Copolymeren, andererseits gegenüber herkömmlichen EPDM-Kautschuken.

In Folge dieser Besonderheiten ist ihre Verwendung für die Herstellung von vernetzten Profilen nicht naheliegend. Erst die gezielte Auswahl spezieller Typen in speziellen Rezepturen und die darauf angepasste Verfahrenstechnik erlaubt die Herstellung nicht nur von vernetzten Profilen mit üblichem Eigenschaftsbild, sondern führt sogar überraschenderweise zu einem überlegenen Eigenschaftsbild, wie in der Aufgabenstellung formuliert ist.

Besonders bevorzugte Komponenten (B) sind Calciumcarbonate, Aluminium- oder Magnesiumhydroxide, Calciumsulfate, Silikate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol und/oder chlorierte cycloaliphatische Verbindungen wie Dechlorane Plus oder HET-Säure und/oder synergistische Kombinationen aus den aufgezählten halogenhaltigen Verbindungen mit Antimonverbindungen wie Diantimontrioxid.
Bevorzugt liegt in der Polyolefinzusammensetzung der Anteile der Komponente (B) zwischen 30 und 60 Gew%

Vernetzte Profile gemäß der Erfindung lassen sich dadurch herstellen, dass auf das Polymermaterial aus den Komponenten (A) in Gegenwart der Komponenten (B) ein Organosilan der allgemeinen Formel RSiX₃ unter Zugabe eines organischen Peroxids aufgepfropft, sodann das Profil ausgeformt und mit Feuchtigkeit vernetzt wird.

Bevorzugte Organosilane der allgemeinen Formel RSiX₃ sind Vinyltrimethoxysilan, Vinyltriethoxysilan oder Gamm-(meth)acryloxypropyltrimethoxysilan, bevorzugte radikalerzeugende Komponenten sind organische Alkylperoxide mit Halbwertszeiten von 0,1 h bei Temperaturen > 80°C, insbesondere 2,5-Dimethyl-2,5-di(tertbutylperoxo)hexan und/oder 2,5-Dimethyl-2,5-di(tertbutylperoxo)3-hexin und/oder Di(tertbutyl)peroxid und/oder 1,3-Di(tertbutylperoxoisopropyl)benzol und/oder Dicumylperoxid und/oder Tertbutylcumylperoxid.

Durch Verwendung der erfindungsgemäßen Polymerzusammensetzung in den vernetzten Profilen können die bei der kautschuktypischen Aufbereitung und Verarbeitung auftretenden Schwierigkeiten vermieden werden. Auf Grund des geringen Aufwandes beim Umgang mit rieselfähigen Poly(ethen-co-1-olefin)-Granulat an Stelle der Kautschukballenware ergeben sich kürzere Zykluszeiten und damit niedrigere Herstellungskosten, auf eine Vormischung zwischen EPDM und den Zuschlagsstoffen im Kneter kann gänzlich verzichtet werden.

Die enge Molmassenverteilung der mittels Metallocenkatalyse hergestellten Polyolefine führt zu hohen Vernetzungsgraden bei reduziertem Silanverbrauch. Weiterhin kann durch die erfindungsgemäße Verwendung der beschriebenen Polymergemische auf die für EPDM-Kautschuke typische nachgeschaltete Vulkanisation gänzlich verzichtet werden. Die diffusionskontrollierte Hydrolyse- und Kondensationsreaktion der Alkoxysilane in den erfindungsgemäßen Polymergemischen läuft energetisch vorteilhaft in einem Wasserbad ab.

Das Fehlen von Doppelbindungen verleiht den erfindungsgemäßen, vernetzten Profilen eine hohe Alterungsstabilität und natürliche UV-Beständigkeit, weiterhin sind so Produkte zugänglich, welche keine Ausblüh- oder Ausschwitzerscheinungen aufweisen und die nicht zur Verfärbung neigen. Eine Einfärbung der erfindungsgemäßen Profile in beliebigen Farbtönen ist problemlos durchführbar.

Den erfindungsgemäßen Polymerzusammensetzungen in den vernetzten Profilen können eine Reihe weiterer Verbindungen zugesetzt werden, z. B. Gleit- oder Verarbeitungsmittel, Nukleierungsmittel, Stabilisatoren, Antistatika, Prozessöle, Pigmente oder Treibmittel.

Vernetzte Profile gemäß der Erfindung finden u. a. Anwendung in Ein- und Mehrlumenschlauchleitungen bzw. Kathetern für die medizinischen Anwendungen Infusion/Transfusion, Dialyse, Urologie, Kardiologie/ECC, Anästhesie und Wunddrainage. Für Anwendungen im Automobilbereich lassen sich beispielsweise Schläuche zur Kühlwasserförderung, für beheizte und unbeheizte Scheibenwasch- und Scheinwerferreinigungsanlagen oder für pneumatische Systeme herstellen.
In Frage kommen auch Gartenschläuche, Getränkeschläuche, fadenarmierte Industrieschläuche, Hochdruckschläuche und Leitungen zur Betoninjektion.
Unter die vernetzten Profile fallen beispielsweise Dichtungsprofile für Haushaltsgeräte, für Fensterabdichtungen, für Dehnungsfugen, Fensterschachtabdeckungen, Scheibeneinfassprofile oder Abdeckprofile für den Automobilbereich. Weiterhin sind mögliche Anwendungen Profile für Küchen-, Wohn- und Büromöbel, wie Kantenbänder, Pufferprofile, Türanschlagprofile und Sockeldichtprofile.

### In den folgenden Beispielen wird die vorliegende Erfindung verdeutlicht:

### Beispiel 1 - 2 und Vergleichsbeispiele 1 - 2:

In einem Einschneckenextruder mit Barriereschnecke; einem L/D-Verhältnis von 30; Dosiereinrichtung für das flüssige Silan/Peroxid/Katalysator-Gemisch; Temperaturprofil 140/160/170/180/200/220/240/280, werden über die Dosierwaage das entsprechende Polyolefin (sh. Tabelle) und optionell der Füllstoff dosiert. Die Mischung wird aufgeschmolzen und in den Extruder das flüssige Silan/Peroxid/Katalysator-Gemisch eindosiert und schließlich das Profil ausgeformt.

Die Zusammensetzungen sind in Gewichtsteilen der einzelnen Komponenten angegeben und betragen:

| | Beispiel 1 | Beispiel 2 | Vergleichsbeispiel 1 | Vergleichsbeispiel 2 |
|---|---|---|---|---|
| Rohstofftyp und Anteil | PE 80 | PE 100 | EPDM 100 | EPDM 100 |
| Silan/Peroxid/Katalysator-Gemisch | 1,0 | 1,0 | -- | -- |
| Füllstoff Calciumcarbonat | 20 | 0 | -- | -- |
| Oberflächenausfall | Shark Skin* | Sehr gut | Ausblühungen | Klebrig |

| | | | | |
|---|---|---|---|---|
| * Shark Skin: Haifischhaut | | | | |

Silan/Peroxid/Katalysator-Gemisch: Silcat R-HE von Fa Crompton OSi Group
- PE in Beispiel 1:: Metallocen-Polyolefin mit Schmelzindex 1.0 g/10 min bei 190°C/2.16 kg und 0,885 g/cm³
- PE in Beispiel 2:: Metallocen-Polyolefin mit Schmelzindex 3.0 g/10 min bei 190°C/2.16 kg und 0,875 g/cm³
- EPDM im Vergleichsbeispiel 1:: Ethylen-Propylen-Dienkautschuk schwefelvernetzt
- EPDM im Vergleichsbeispiel 2:: Ethylen-Propylen-Dienkautschuk silanvernetzt

Die folgende Tabelle zeigt die mechanischen Eigenschaften der erfindungsgemäßen vernetzten Profile im Vergleich zum Stand der Technik:

| | Beispiel 1 | Beispiel 2 | Vergleichsbeispiel 1 | Vergleichsbeispiel 2 |
|---|---|---|---|---|
| Vernetzungsgrad [%] | 93.5 | 89.0 | 74.5 | 69.5 |
| Weiterreißfestigkeit [N/mm] | 7.2 | 8.9 | 8.9 | 7.8 |
| Reißfestigkeit [N/mm²] | 10.0 | 10.0 | 4.3 | 5.1 |
| Reißdehnung [%] | 348.4 | 429.3 | 140 | 164.0 |
| Druckverformungsrest [%] | 35.1 | 35.8 | 35 | 40 |

Reißfestigkeit nach ISO 527 [N/mm²]; Reißdehnung nach ISO 527 [%]; Weiterreißfestigkeit nach DIN 53507 [N/mm]; Druckverformungsrest 24h bei 70°C nach DIN 53517 [%]; Vernetzungsgrad nach DIN 16892 [%].

## Patentansprüche

1. Profile aus einer vernetzten Polyolefinzusammensetzung, die mindestens aus den folgenden zwei Komponenten besteht:
(I) 100 Gewichtsteile einer Komponente (A), bestehend aus einer silangepfropften Polyolefinmischung, wobei mindestens ein Mischungsbestandteil davon ein Ethylen-α-Olefin-Copolymer mit mehr als 3 C-Atomen ist, dessen Schmelzindex grϕier 3,0 g/10 min bei 190°C/2,16 kg, dessen Molgewichtsverteilung M_{w}/Mₙ zwischen 1,5 und 3,5 liegt und dessen Schmelzpunkt kleiner 100°C ist.
(II) 0 - 200 Gewichtsteile einer Komponente (B), bestehend aus einem oder mehreren anorganischen Füllstoffen und/oder halogenhaltigen Flammschutzmitteln und/oder synergistischen Flammschutzmitteln, aus Antimon- und Halogenverbindungen.

2. Profile gemäß Anspruch 1,
**dadurch gekennzeichnet,**
**dass** das Ethylen-α-Olefin-Copolymere mit mehr als 3 C-Atomen mittels Metallocenkatalyse hergestellt wurde.

3. Profile gemäß Anspruch 1, **dadurch gekennzeichnet, dass** die Polyolefinmischung neben dem Ethylen-α-Olefin-Copolymeren herkϕmmliche kristalline Polyolefine, vorzugsweise Polypropylen und/oder Niederdruckpolyethylen zwischen 0 und 30 Gewichtsteilen, bezogen auf 100 Gewichtsteile Ethylen-α-Olefin-Copolymer enthölt.

4. Profile gemäß Anspruch 1, **dadurch gekennzeichnet, dass** Komponente (B) ausgewählt ist aus der Gruppe Calciumcarbonate, Aluminium- oder Magnesiumhydroxide, Calciumsulfate, Silikate, Kieselsäuren, Ruße, Graphite und/oder halogenhaltige organische Flammschutzmittel, wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol u/o chlorierte cycloaliphatische Verbindungen wie Dechlorane Plus oder HET-Säure und/oder synergistische Kombinationen aus den aufgezählten halogenhaltigen Verbindungen mit Antimonverbindungen wie Diantimontrioxid. Bevorzugt liegt in der Polyolefinzusammensetzung der Anteile der Komponente (B) zwischen 30 und 60 Gew%.

5. Profile gemäß Anspruch 1, **dadurch gekennzeichnet, dass** die silangepfropfte Polyolefinmischung in der Schmelze durch Reaktion von organischen Silanen der allgemeinen Formel RSiX₃ mit der Polyolefinmischung in Gegenwart von radikalbildenden Komponenten erzeugt wird, wobei R ein olefinisch ungesättigter Kohlenwasserstoffrest und X eine hydrolisierbare organische Gruppe ist und dass gleichzeitig mit dieser Reaktion auch die Formgebung stattfindet.

6. Profile gemäß Anspruch 5, **dadurch gekennzeichnet, dass** das organische Silan der allgemeinen Formel RSiX₃ ausgewählt ist aus der Gruppe Vinyltrimethoxysilan, Vinyltriethoxysilan oder Gamma-(meth)acryl-oxypropyltrimethoxysilan.

7. Profile gemäß Anspruch 5, **dadurch gekennzeichnet, dass** die radikalerzeugende Komponente ausgewählt ist aus der Gruppe Alkylperoxid, Acylperoxid, Ketonperoxid, Hydroperoxid, Peroxocarbonat, Perester, Peroxoketal und/oder ein Peroxooligomeres, insbesondere aus der Gruppe Alkylperoxid, ist.

8. Profile gemäß Anspruch 5, **dadurch gekennzeichnet, dass** die radikalerzeugende Komponente eine Azoverbindung ist.

9. Profile gemäß Anspruch 5, **dadurch gekennzeichnet, dass** die radikalerzeugende Komponente ein organisches Alkylperoxid ist, das eine Halbwertszeit von 0,1 h bei Temperaturen > 80° aufweist.

10. Profile gemäß Anspruch 9, **dadurch gekennzeichnet, dass** das organische Alkylperoxid ausgewählt ist aus der Gruppe 2,5-Dimethyl-2,5-di(tertbutylperoxo)hexan und/oder 2,5-Dimethyl-2,5-di(tertbutylperoxo)3-hexin und/oder Di(tertbutyl)peroxid und/oder 1,3-Di(tertbutylperoxoisopropyl)benzol und/oder Dicumylperoxid und/oder Tertbutylcumylperoxid.

11. Profile gemäß Anspruch 1, **dadurch gekennzeichnet**, **dadurch gekennzeichnet, dass** der Gelgehalt im Bereich zwischen 1 und 90 %, insbesondere zwischen 20 und 80 % liegt.

12. Profile nach einem der vorhergehenden Ansprüche, **dadurch gekennzeichnet, dass** die Zugabe von 0 - 200 Gewichtsteilen an Zusätzen, bezogen auf die Komponenten A und B, in Form von 0 - 5 Gewichtsteilen Gleit- oder Verarbeitungsmittel, 0 - 2 Gewichtsteilen Nukleierungsmittel, 0 - 1 Gewichtsteil Stabilisatoren, 0 - 2 Gewichtsteilen Antistatika, 0 - 100 Gewichtsteilen Prozessöl, 0 - 5 Gewichtsteilen Pigmente und/oder 0 - 3 Gewichtsteilen Treibmittel erfolgt.

13. Profile nach einem der vorhergehenden Ansprüche, **dadurch gekennzeichnet, dass** die Zugabe eines Katalysators oder eines Katalysatorgemisches zur Beschleunigung der Vernetzungsreaktion erfolgt.

14. Profile gemäß Anspruch 13, **dadurch gekennzeichnet, dass** der Katalysator ausgewählt ist aus der Gruppe Dibutylzinndilaurat, Dibutylzinnoxid, Zinnoctoat, Dibutylzinnmaleat oder Titanylacetonat ist.

15. Herstellung des Profils nach einem der vorhergehenden Ansprüche, **dadurch gekennzeichnet, dass** Silan auf die Polyolefinzusammensetzung aufgepfropft wird und gleichzeitig die Formgebung des Profiles erfolgt, wobei ein Einschneckenextruder mit Barriereschnecke als Verarbeitungsaggregat zum Einsatz kommt.

16. Verwendung der Profile nach einem der vorhergehenden Ansprüche, **dadurch gekennzeichnet, dass** vernetzte Profile gemäß der Erfindung u. a. Anwendung finden in Einund Mehrlumenschlauchleitungen bzw. Kathetern für die medizinischen Anwendungen Infusion/Transfusion, Dialyse, Urologie, Kardiologie/ECC, Anästhesie und Wunddrainage. Für Anwendungen im Automobilbereich lassen sich beispielsweise Schläuche zur Kühlwasserförderung, für beheizte und unbeheizte Scheibenwasch- und Scheinwerferreinigungsanlagen oder für pneumatische Systeme herstellen.
In Frage kommen auch Gartenschläuche, Getränkeschläuche, fadenarmierte Industrieschläuche, Hochdruckschläuche und Leitungen zur Betoninjektion.
Unter die vernetzten Profile fallen beispielsweise Dichtungsprofile für Haushaltsgeräte, für Fensterabdichtungen, für Dehnungsfugen, Fensterschachtabdeckungen, Scheibeneinfassprofile oder Abdeckprofile für den Automobilbereich. Weiterhin sind mögliche Anwendungen Profile für Küchen-, Wohn- und Büromöbel, wie Kantenbänder, Pufferprofile, Türanschlagprofile und Sockeldichtprofile.
